# EUROPÄISCHE PATENTANMELDUNG

(11) **EP 4 625 875 A1**
(43) Veröffentlichungstag der Anmeldung: **01.10.2025**
(21) Anmeldenummer: 24167782.2
(22) Anmeldetag: 28.03.2024
(51) Int. Cl.: H04L 9/08, H04B 10/70, H04J 14/02

(54) **VERFAHREN UND SYSTEM FÜR EINE ZENTRALISIERTE ANALYSE VON QUANTENZUSTÄNDEN**

(71) Anmelder: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Maucher Jenkins Patent- und Rechtsanwälte

(57) **Zusammenfassung**

Die Erfindung betrifft eine Lösung für eine zentralisierte Analyse von Quantenzuständen von Einzelphotonen, welche durch räumlich verteilt angeordnete quantenmechanische Einrichtungen QMDs (1₁, 1₂, ... 1ₙ) ausgesendet werden, einschließlich von Quantenzuständen von Einzelphotonen, die durch als Gruppe zusammenwirkende QMDs (1₁, 1₂, ... 1ₙ), nämlich zusammenwirkende Sensoren zur quantenmechanischen Erfassung physikalischer Feldgrößen ausgesendet werden. Die von den QMDs (1₁, 1₂, ... 1ₙ) ausgesendeten Einzelphotonen werden über Glasfasern (3₁, 3₂, ... 3ₙ) Eingängen eines N x N Arrayed Waveguide Grating AWG (2) zugeführt, von welchem sie durch passives, transparentes optisches Routing über Glasfasern (4₁, 4₂, ... 4ₙ) unterschiedlichen Eingangsports mindestens einer, gegenüber den QMDs (1₁, 1₂, ... 1ₙ) beabstandeten zentralen, mit Detektoren für Einzelphotonen ausgestatteten Analyseeinrichtung (6) zugeleitet werden. In der mindestens einen Analyseeinrichtung (6) werden die Quantenzustände der Einzelphotonen einer jeweiligen Gruppe von QMDs (1₁, 1₂, ... 1ₙ) stets gemeinsam und separat gegenüber den Quantenzuständen von anderen QMDs (1₁, 1₂, ... 1ₙ) oder Gruppen von QMDs (1₁, 1₂, ... 1ₙ) empfangener Einzelphotonen analysiert werden.

## Beschreibung

Die Erfindung betrifft eine Lösung für eine zentralisierte Analyse von Quantenzuständen von Einzelphotonen, welche ausgesendet werden durch mehrere räumlich verteilt angeordnete quantenmechanische Einrichtungen (im Weiteren auch QMD = Quantum Mechanical Device respektive, in der Mehrzahl, QMDs = Quantum Mechanical Devices), insbesondere durch quantenmechanische Einrichtungen, die als Sensoren zur Erfassung physikalischer Feldgrößen unter Nutzung quantenmechanischer Prinzipien ausgebildet sind. Gegenstände der Erfindung sind ein entsprechendes Verfahren und ein zur Durchführung dieses Verfahrens in geeigneter Weise ausgebildetes System.

Die voranschreitende Entwicklung des Internet of Things IoT eröffnet völlig neue Möglichkeiten, bringt aber auch eine Reihe neuer Herausforderungen mit sich. So ermöglicht es das IoT beispielsweise automatisiert respektive autonom arbeitende Maschinen, Einrichtungen und Vorrichtungen von nahezu beliebigen Standorten zu überwachen und erforderlichenfalls bei Problemen in die sich dabei vollziehenden Abläufe steuernd einzugreifen. Auch eine Veränderung der sich ansonsten weitgehend automatisiert vollziehenden Abläufe kann dabei durch Einwirkung aus der Ferne angestoßen werden. Zur Nutzung dieser Möglichkeiten ist es typischerweise erforderlich, an den betreffenden, aus der Ferne überwachten Maschinen, Anlagen und Einrichtungen sowie gegebenenfalls auch in deren Umfeld eine Vielzahl von Sensoren anzuordnen, deren Sensordaten respektive Messdaten im Zuge der Überwachung ausgewertet und gegebenenfalls zur Ableitung von Steuersignalen für sich ebenfalls am Ort der überwachten Einrichtungen befindende Aktoren genutzt werden. Dazu müssen die entsprechenden Sensorsignale zumeist - jedenfalls, wenn mittels ihrer Maschinen, Anlagen oder Einrichtungen überwacht werden sollen - an der entfernten Stelle möglichst in Echtzeit zur Verfügung stehen.

Darüber hinaus gibt es Einsatzfälle, bei welchen mittels geeigneter, beispielsweise Änderungen magnetischer und/oder elektrischer Feldgrößen detektierender Sensoren ein bestimmtes Areal oder ein bestimmter räumlicher Bereich überwacht respektive gemonitort wird. Häufig bestehen dabei sehr hohe Genauigkeitsanforderungen. Soweit eine Überwachung eines entsprechenden räumlichen Bereichs oder einer Mehrzahl von Einrichtungen aus der Ferne erfolgen soll, kann auch dies im Einzelfall zeitkritisch sein.

Zur Erfüllung des vorstehend dargestellten Erfordernisse könnten künftig beispielsweise Quantensensoren dienen, das heißt Sensoren respektive Einrichtungen, welche auf der Nutzung quantenmechanischer Effekte basieren. Insbesondere auch bei der schon angesprochenen Überwachung bestimmter räumlicher Bereiche auf das Eintreten von Änderungen bei feldphysikalischen Größen, wie beispielsweise Änderungen des Erdmagnetfelds, kommt der Einsatz von Quantensensoren in Betracht. Diese zeichnen sich in diesem Zusammenhang durch eine sehr hohe Empfindlichkeit und Genauigkeit aus.

Mit Blick auf die zuvor angesprochene Bereitstellung von Sensordaten in Echtzeit bieten Quantensensoren den Vorteil, dass am Ort ihrer Anordnung eintretende Änderungen der detektierten Größen instantan an entfernter Stelle verfügbar gemacht werden können. Dies hängt mit dem Wirkprinzip derartiger Sensoren zusammen, welches darauf beruht, mittels der Sensoren detektierte Änderungen physikalischer Größen im Ergebnis einer Analyse der Quantenzustände von diesen Sensoren ausgesendeter Einzelphotonen zu analysieren. Hierbei wird das Phänomen der Verschränkung quantenmechanischer Zustände genutzt, mit der Folge, dass eine am Ort des Sensors eintretende Veränderung der detektierten Größe sich instantan auf den Quantenzustand durch den betreffenden Sensor bereits ausgesendeter Photonen auswirkt, und zwar unabhängig von der Distanz zwischen einem jeweiligen ausgesendeten (und noch nicht gemessenen) Einzelphoton und dem dieses aussendenden Sensor.

Allerdings sind insbesondere Einrichtungen zur Analyse der Quantenzustände von Einzelphotonen, also auch von Quantensensoren ausgesendeter Einzelphotonen, vergleichsweise komplex und sehr teuer. Daher wäre es sehr günstig, eine solche Analyse zu zentralisieren, das heißt, es zu ermöglichen, dass mittels einer Analyseeinrichtung die Quantenzustände von Einzelphotonen einer Mehrzahl von Sensoren oder von mehreren, jeweils durch zwei oder mehr zusammenwirkende Sensoren ausgebildeten Sensorgruppen und gegebenenfalls auch Quantenzustände von anderen Photonenquellen ausgesendeter Einzelphotonen ausgewertet werden können.

Aufgabe der Erfindung ist es daher, eine Lösung zu schaffen, welche eine ressourcen- und kosteneffiziente zentralisierte Analyse von Quantenzuständen von Einzelphotonen ermöglicht, welche durch mehrere räumlich verteilt angeordnete quantenmechanische Einrichtungen (QMDs) ausgesendet werden. Hierfür sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert. Vorteilhafte Aus- und Weiterbildungen der Erfindung sind durch die jeweiligen Unteransprüche gegeben.

Entsprechend der Aufgabe handelt es sich bei dem nachfolgend beschriebenen Verfahren um ein Verfahren für eine zentralisierte Analyse von Quantenzuständen von Einzelphotonen, welche durch mehrere räumlich verteilt angeordnete quantenmechanische Einrichtungen (wie bereits eingangs ausgeführt nachfolgend und in den Patentansprüchen als QMD respektive QMDs bezeichnet) ausgesendet werden. Das Verfahren schließt hierbei in jedem Fall die Analyse von Quantenzuständen solcher Einzelphotonen ein, die durch mindestens zwei als Gruppe zusammenwirkenden QMDs ausgesendet werden, wobei es sich bei mindestens einer solchen Gruppe um QMDs handelt, die als Sensoren zur quantenmechanischen Erfassung physikalischer Feldgrößen (und deren zeitlicher Änderungen) zusammenwirken. Entsprechende Sensoren sollen nachfolgend synonym auch als Quantensensoren bezeichnet werden.

Gemäß dem Verfahren werden die von den QMDs ausgesendeten Einzelphotonen über Glasfasern den Eingängen eines N × N Arrayed Waveguide Grating (im Weiteren N × N AWG) zugeführt. Von diesem N × N AWG werden die Einzelphotonen durch passives, transparentes optisches Routing über mit den Ausgängen des N × N AWG verbundene Glasfasern unterschiedlichen Eingangsports mindestens einer, gegenüber den QMDs beabstandeten zentralen Analyseeinrichtung zugeleitet. Die vorgenannte mindestens eine Analyseeinrichtung ist mit mehreren Detektoren zum Empfang der eingehenden Einzelphotonen ausgestattet.

In der mindestens einen Analyseeinrichtung respektive in jeder der gegebenenfalls mehreren Analyseeinrichtungen werden die Quantenzustände der Einzelphotonen einer jeweiligen Gruppe von QMDs mittels der Detektoren stets gemeinsam und dabei separat gegenüber den Quantenzuständen von anderen QMDs oder Gruppen von QMDs empfangener Einzelphotonen analysiert.

Durch die Verwendung des eine passive optische Komponente darstellenden N × N AWG (und gegebenenfalls weiterer, später noch zu nennender, überwiegend ebenfalls passiver, aber in jedem Falle die Quantenzustände nicht beeinflussender optischer Komponenten) ermöglicht das zuvor in seiner grundsätzlichen Ausgestaltung beschriebene Verfahren eine zentralisierte Analyse durch quantenmechanische Einrichtungen (QMDs) ausgesendeter Einzelphotonen, da deren quantenmechanischer Zustand auf dem Übertragungsweg erhalten bleibt. Insbesondere bleibt die zwischen einem solchen, als Sensor zur Erfassung physikalischer Feldgrößen unter Nutzung quantenmechanischer Effekte ausgebildeten QMD (Quantensensor) bestehende Verschränkung mit bereits durch dieselbe Einrichtung (QMD) ausgesendeten Einzelphotonen erhalten. Dadurch sind an dem betreffenden Sensor (QMD) eintretende Veränderungen der jeweils erfassten physikalischen Feldgröße instantan auch bei den in der entfernten zentralen Analyseeinrichtung eingehenden, mit der aussendenden QMD verschränkten Einzelphotonen und deren Quantenzuständen feststellbar. Bereits die Verwendung eines vorzugsweise in einem Sternpunkt eines Netzwerks angeordneten N × N AWG führt dabei im Hinblick auf die sich verringernde Anzahl erforderlicher Glasfaserverbindungen zur Einsparung von Ressourcen. Unter Ausführung des Verfahrens können im Betrieb eines dazu ausgebildeten Systems in einem Zeitintervall die durch ein Sensornetzwerk/Sensorcluster erfassten Messwerte mittels der (mindestens einen) Analyseeinheit analysiert werden, zu einem anderen Zeitinterfall die eines anderen Sensornetzwerkes/Sensorclusters mithilfe derselben Analyseeinheit. Da entsprechende Analyseeinrichtungen mit ihren Analyseeinheiten/Analysatoren kostenintensiv sind, bringen eine Mehrfachverwendung und eine universelle Verwendbarkeit einer solchen zentral angeordneten Analyseeinrichtung viele Vorteile mit sich. Hierbei mmüssen auch bei Veränderungen auf der Eingangsseite, also bei Veränderungen der Anzahl der QMDs, ihrer örtlichen Verteilung oder ihrer Gruppenzuordnung in vielen Fällen in der mindestens einen Analyseeinrichtung keine oder gegebenenfalls nur geringe Änderungen vorgenommen werden.

Physikalische Feldgrößen, wie insbesondere Größen elektrischer, magnetischer oder elektromagnetischer Felder, sowie an diesen auftretende Veränderungen werden typischerweise bezüglich räumlicher Bereiche, wie beispielsweise bezüglich eines bestimmten Gebiets auf der Erde (auf, über oder unter deren Erdoberfläche), das heißt an unterschiedlichen Punkte/Orten eines solchen räumlichen Bereichs erfasst. Unter anderem aus diesem Grund, ist das Verfahren gemäß den vorstehenden Darstellungen insbesondere auf eine gruppenbezogene Analyse von Quantenzuständen durch mehrere QMDs ausgesendeter Einzelphotonen ausgerichtet. Jedoch können auch mehrere an demselben Ort in einer Domäne angeordnete Sensoren respektive die sie ausbildenden QMDs zusammenwirken und daher eine Gruppe hinsichtlich der Quantenzustände von ihnen ausgesendeter Einzelphotonen gemeinsam auszuwerten sein. Die jeweilige Wellenlänge der durch eine Gruppe als zusammenwirkende QMDs ausgesendeten Einzelphotonen wird dabei durch die Photonenquelle der betreffenden QMDs und deren Betriebsweise, das heißt durch die Art ihrer Anregung, bestimmt. Nähere Ausführungen dazu sollen an späterer Stelle noch erfolgen.

Grundsätzlich kommt es in Betracht, dass die Einzelphotonen mit ihrer ursprünglichen, durch die Photonenquelle eines jeweiligen QMD bestimmten Wellenlänge über das noch zu beschreibende Netzwerk respektive das System und dessen Übertragungswege an die mindestens eine entfernte Analyseeinrichtung übertragen werden. Allerdings liegt die Wellenlänge von Einzelphotonen, welche insbesondere durch heute gängige Photonenquellen von zur Verwendung als Sensoren in Betracht kommenden QMDs ausgesendet werden, zumeist in einem Bandbereich um 750 nm. Einzelphotonen mit derartigen Wellenlängen unterliegen jedoch bei ihrer Übertragung über Glasfasern einer vergleichsweise hohen Dämpfung. Außerdem lassen erste durchgeführte Experimente vermuten, dass die typischerweise in der Praxis zum Einsatz kommenden Glasfasern bei einer solchen Wellenlänge möglicherweise bei Einzelphotonen in Bezug auf die Wellenführung innerhalb der Faser nicht mehr das gewünschte Übertragungsverhalten zeigen und daher eventuell spezielle und teure Fasern benötigt würden.

Daher sollte das Verfahren vorzugsweise so ausgestaltet respektive implementiert werden, dass die Wellenlänge der von den QMDs ausgesendeten Einzelphotonen vor ihrer Übertragung an das N × N AWG oder vor ihrer Übertragung vom N × N AWG an die mindestens eine Analyseeinrichtung mittels eines speziellen optischen Frequenzkonverters auf ein Übertragungsband mit einem Wellenlängenbereich bei 1.550 nm konvertiert wird. In jedem Falle lassen sich hierdurch ohne eine Zerstörung der jeweiligen Quantenzustände der übertragenen höhere Übertragungsreichweiten erzielen. Denkbar wäre es in diesem Zusammenhang aber auch, dass eine Übertragung mit 1.550 nm Wellenlänge künftig auch ohne einen speziellen Konverter möglich ist, nämlich dann, wenn Photonenquellen verfügbar sind, die verschränkte Einzelphotonen unmittelbar mit dieser Wellenlänge erzeugen.

Nur höchst vorsorglich wird an dieser Stelle darauf hingewiesen, dass es sich bei den im Zusammenhang mit der Beschreibung der Erfindung und in den Ansprüchen genannten Glasfasern nicht zwingend um Lichtwellenleiter handeln muss, welche tatsächlich aus Glas respektive Quarzglas bestehen. Vielmehr sind in der Praxis, wenn auch typischerweise eher bei Inhouse-Systemen, teilweise auch aus Kunststoff bestehende Lichtwellenleiter im Einsatz, welche im einschlägigen Fachbereich aber dennoch verallgemeinernd üblicherweise ebenfalls als Glasfasern bezeichnet werden. Entsprechendes gilt demnach auch im Kontext der hier beschriebenen Erfindung.

Die Art und Weise, wie letztlich die Quantenzustände der von der mindestens einen Analyseeinrichtung empfangenen Einzelphotonen in dieser Analyseeinrichtung ausgewertet werden, ist ausdrücklich nicht Gegenstand der vorliegenden Erfindung und soll daher an dieser Stelle auch nicht Gegenstand detaillierter Erörterungen sein. Insoweit sind hierfür sicherlich unterschiedliche Möglichkeiten denkbar.

Ohne, wie gesagt, auf weitere Details einzugehen, wird jedoch davon ausgegangen, dass in der Praxis insbesondere im Zusammenhang mit der Auswertung der Quantenzustände durch eine Gruppe von Quantensensoren ausgesendeter Einzelphotonen vorzugsweise das Prinzip der Interferenz zum Einsatz kommen wird. Die durch die in einer Gruppe als Sensoren zusammenwirkenden QMDs ausgesendeten Einzelphotonen werden demnach bei der mittels der Detektoren der Analyseeinrichtung erfolgenden Analyse ihrer Quantenzustände in einer Interferenzeinheit der Analyseeinrichtung zur Interferenz gebracht werden. Eine entsprechende Interferenzeinheit und mit ihr gekoppelte Detektoren stellen nach diesem Verständnis eine Analyseeinheit, das heißt einen Teil der gegebenenfalls mehrere verschiedene Analyseeinheiten umfassenden Analyseeinrichtung dar.

Die Nutzung des Prinzips der Interferenz setzt dabei voraus, dass die Einzelphotonen der als Gruppe zusammenwirkenden Sensoren innerhalb der dafür genutzten Analyseeinheit (Interferenzeinheit) dieselbe Wellenlänge aufweisen. Dies kann dadurch gegeben sein, dass die Einzelphotonen durch die als Gruppe von Sensoren zusammenwirkenden QMDs mit derselben Wellenlänge generiert respektive ausgesendet werden oder dass sie vor ihrem Eintritt in die mindestens einen Analysevorrichtung mit darin angeordneter, eine Interferenzeinheit umfassender Analyseeinheit mittels mindestens eines (den Quantenzustand nicht verändernden) Frequenzkonverters hinsichtlich ihrer Frequenz und somit hinsichtlich ihrer Wellenlänge (c = λ × f, mit c= Lichtgeschwindigkeit, λ = Wellenlänge und f = Frequenz) auf dieselbe Wellenlänge konvertiert werden. Zu beiden Möglichkeiten sollen später noch einige Ausführungen erfolgen.

Darüber hinaus kann das Verfahren so implementiert werden, dass in derselben mindestens einen Analyseeinrichtung Quantenzustände sowohl von Einzelphotonen analysiert werden, die von mindestens einer Gruppe als Sensoren fungierenden QMDs empfangen werden, als auch Quantenzustände von Einzelphotonen anderer als Gruppe zusammenarbeitender QMDs, bei denen es sich nicht um Sensoren handelt. Gemäß einer solchen Implementierung kann es vorgesehen sein, dass in einer Analyseeinheit der mindestens einen Analyseeinrichtung die Quantenzustände von Einzelphotonen mindestens einer Sensorengruppe analysiert werden und von einer anderen Analyseeinheit derselben Analyseeinrichtung Einzelphotonen, welche von einer Gruppe von QMDs empfangen werden, die Teil eines Systems der Twin Field Quantum Key Distribution TF-QKD sind.

Durch die letztgenannte, speziell hierfür ausgebildete Analyseeinheit wird dabei untersucht, ob ein spezielles quantenmechanisches Experiment, nämlich die Projektion der von den als Teil eines TF-QKD-Systems ausgebildeten QMDs eingehenden Einzelphotonen in einen Bell-Zustand, geglückt ist. Bei den zwei QMDs, deren von ihnen ausgesendete Einzelphotonen auf das Eintreten eines solchen Bell-Zustands untersucht werden, handelt es sich gemäß den in der Kryptographie verwendeten Begrifflichkeiten um "Alice" und "Bob". In jedem Falle werden auch bei einer solchen Ausgestaltung respektive Nutzung des erfindungsgemäßen Verfahrens die Einzelphotonen sowohl der als Gruppe von Sensoren zusammenwirkenden QMDs als auch von "Alice" und "Bob" über das N × N AWG geführt. Hierbei ist es sogar möglich, dass die Einzelphotonen beider Gruppen (als Sensoren arbeitende QMDs einerseits und als Teil eines TF-QKD-Systems fungierende QMDs andererseits) dieselbe Wellenlänge aufweisen. Die jeweiligen Einzelphotonen werden durch das zyklisch arbeitende N × N AWG jeweils den mit der zu verwendenden Analyseeinheit der mindestens einen Analyseeinrichtung (mit gegebenenfalls zwischengeschalteter optischer Switchmatrix - hierzu später mehr) verschalteten Ausgängen zugeleitet.

Im Zusammenhang mit der zuvor dargestellten Ausbildung des Verfahrens oder aber auch unabhängig davon ist es zudem möglich, das Verfahren so zu implementieren, dass in derselben mindestens einen Analyseeinrichtung Quantenzustände von Einzelphotonen analysiert werden, welche von zwei oder mehr unterschiedlichen Gruppen als Sensoren ausgebildeter QMDs ausgesendet werden. Gegebenenfalls können dabei die Einzelphotonen mehrerer unterschiedlicher Gruppen von als Sensoren genutzten QMDs sogar innerhalb der mindestens einen Analyseeinrichtung mittels derselben Analyseeinheit ausgewertet werden. Die Auswertung der Einzelphotonen der unterschiedlichen Gruppen von QMDs geschieht hierbei gruppenweise, nach Wellenlängen gefiltert und/oder im Zeitmultiplex.

Die Flexibilität des Verfahrens, welches die Verwendung einer jeweiligen, an zentraler Stelle angeordneten Analyseeinrichtung zur Analyse der Quantenzustände von Einzelphotonen ermöglicht, die von einer Vielzahl unterschiedlichen Zwecken dienenden QMDs eingehen, ohne dass es hierbei aufwändiger Veränderungen des Übertragungsweges mit dem N × N AWG bedarf, zeigt sich auch am Beispiel der folgenden Implementierungsmöglichkeit. Demnach werden entsprechend einer möglichen Verfahrensgestaltung die Quantenzustände mehrerer Gruppen als Sensoren zur quantenmechanischen Erfassung physikalischer Größen ausgebildeter QMDs analysiert, wobei die Sensoren einer Gruppe an unterschiedlichen Orten angeordnet sind, wo sie jeweils gemeinsam mit mindestens einem Sensor mindestens einer anderen Gruppe ein örtliches Cluster von Sensoren ausbilden. Hierbei können die von den QMDs eines jeweiligen Clusters ausgesendeten Einzelphotonen wellenlängenmultiplex gemeinsam über eine Glasfaser an das N × N AWG übertragen werden. Das N × N AWG in seiner zyklischen Arbeitsweise wirkt insoweit vergleichbar einem Demultiplexer und führt die Einzelphotonen über verschiedene Ausgänge mindestens einer Analyseeinrichtung in der Weise zu, dass jedenfalls die Quantenzustände von Einzelphotonen zu jeweils einer Gruppe gehörenden QMDs, also Einzelphotonen derselben Wellenlänge, durch dieselbe Analyseeinheit der Analyseeinrichtung analysiert werden.

Ergänzend sei an dieser Stelle darauf hingewiesen, dass je nach Einsatzfall auch Konstellationen denkbar sind, bei welchem mehrere als Gruppe zusammenwirkende Sensoren respektive QMDs gemeinsam in einem örtlichen Cluster angeordnet sind. In einem solchen Kontext können darüber hinaus - wie später anhand eines Ausführungsbeispiels gezeigt werden soll - sogar auch mehrere unterschiedliche Gruppen von Sensoren in einem räumlichen Cluster angeordnet sein. Es ist hierbei lediglich durch eine geeignete Anordnung entsprechender Komponenten und/oder durch ein entsprechendes zeitliches Management bei der Einzelphotonenerzeugung sicherzustellen, dass einer der Analyse der jeweiligen Quantenzustände dienenden Interferenzeinheit, welche gemeinsam mit optischen Detektoren eine Analyseeinheit der mindestens einen Analyseeinrichtung ausbildet, Einzelphotonen derselben Wellenlänge gemeinsam zugeführt werden.

Bei dem die Aufgabe lösenden, zur Ausführung des zuvor beschriebenen Verfahrens geeigneten System handelt es sich um ein Netzwerk. Dieses umfasst mehrere räumlich verteilt angeordnete, Einzelphotonen aussendende QMDs, von denen mindestens zwei als Gruppe zusammenwirken, wobei zusammenwirkende QMDs mindestens einer Gruppe als Sensoren zur quantenmechanischen Erfassung physikalischer Feldgrößen ausgebildet sind. Es umfasst ferner mindestens eine gegenüber den QMDs beabstandete, Quantenzustände von Einzelphotonen analysierende Analyseeinrichtung. Zudem gehören zum System selbstverständlich Glasfaserkabel, deren Glasfasern die Komponenten des Netzwerks miteinander verbinden.

In dem zur Lösung der Aufgabe vorgeschlagenen Netzwerk (System) sind die die Einzelphotonen aussendenden QMDs der vorgenannten mindestens einen Analyseeinrichtung über ein N × N Arrayed Waveguide Grating AWG miteinander verbunden. Dieses N × N AWG ist hierbei derart konfiguriert, dass Einzelphotonen zusammenwirkender QMDs über Ausgänge des N × N AWG verschiedenen Eingangsports jeweils einer Analyseeinrichtung oder mehrerer Analyseeinrichtungen zugeleitet werden. Letztere, das heißt die mindestens eine Analyseeinrichtung, ist außerdem derart ausgebildet und eingerichtet, dass die Einzelphotonen einer jeweiligen, durch zusammenwirkende QMDs gebildeten Gruppe gemeinsam, Einzelphotonen unterschiedlicher Gruppen von QMDs jedoch voneinander separat analysiert werden.

Im Hinblick auf die letztgenannte Anforderung kann die mindestens eine Analyseeinrichtung dazu eine oder mehrere voneinander unabhängig arbeitende Analyseeinheiten aufweisen. Mit Blick auf den schon mehrfach angesprochenen Hauptanwendungszweck der vorgeschlagenen Lösung, nämlich die Analyse der Quantenzustände von Einzelphotonen, welche durch mehrere, als Sensoren ausgebildete und in einer Gruppe zusammenwirkende QMDs ausgesendet werden, erfolgt die Analyse der Quantenzustände der Einzelphotonen, wie bereits zum Verfahren ausgeführt, typischerweise dadurch, dass diese zur Interferenz gebracht und dann entsprechenden Detektoren zur Detektion von Einzelphotonen zugeführt werden. Demgemäß handelt es sich vorzugsweise bei mindestens einer Analyseeinheit der Analyseeinrichtung um eine Interferenzeinheit mit zugehörigen Detektoren für den Empfang von Einzelphotonen.

Die Analyseeinrichtung kann mehrere, für unterschiedliche Zwecke dienende und ausgebildete Analyseeinheiten aufweisen. Sie kann beispielsweise eine Analyseeinheit zur Detektion der Quantenzustände von Einzelphotonen mindestens einer diese aussendenden Gruppe von QMDs aufweisen und außerdem eine Analyseeinheit zur Feststellung des Auftretens einer Projektion in einen Bell-Zustand bei Einzelphotonen, welche durch zwei zu einem TF-QKD-System gehörende QMDs ausgesendet wurden.

Alternativ oder kumulativ kann die Analyseeinrichtung auch eine Analyseeinheit aufweisen, welche dazu ausgebildet und eingerichtet ist, die Quantenzustände von mindestens zwei verschiedenen Gruppen als Sensoren ausgebildeter QMDs empfangener Einzelphotonen zu analysieren. Ein und dieselbe Analyseeinheit der Analyseeinrichtung analysiert hierbei die Quantenzustände der Einzelphotonen der verschiedenen Gruppen von QMDs gruppenweise, nach Wellenlängen gefiltert. Denkbar ist es aber auch, dass die Einzelphotonen der verschiedenen Gruppen von QMDs derselben Analyseeinheit der Analyseeinrichtung mit Hilfe weiterer, dafür in der Analyseeinrichtung ausgebildeter Einheiten im Zeitmultiplex zugeführt werden. In Abhängigkeit von der Art und Weise einer wellenlängenselektiven Filterung der Einzelphotonen unterschiedlicher Gruppen von QMDs innerhalb der Analyseeinrichtung kann aber auch der Filtervorgang selbst dazu führen, dass die Photonen der unterschiedlichen Gruppen der Analyseeinheit respektive deren Detektoren zeitversetzt zugeführt werden, was im Grunde außerdem einem Zeitmultiplexing entspricht.

Wie zum Verfahren bereits ausgeführt, kann es vorgesehen sein, dass die Wellenlänge der von den QMDs ausgesendeten Einzelphotonen zum Zwecke der Übertragung der Einzelphotonen auf ein Übertragungsband mit einem Wellenlängenbereich von 1.550 nm konvertiert werden, so dass das System gemäß einer entsprechenden Weiterbildung außerdem einen zwischen den QMDs und dem N × N AWG oder zwischen dem N × N AWG und der mindestens einen Analyseeinheit angeordneten Frequenzkonverter aufweisen kann. Darüber hinaus kann das System mindestens einen optisch passiven Phasenschieber aufweisen, mit dessen Hilfe Laufzeitunterschiede zwischen den Photonen einzelner, zu einer Gruppe gehörender QMDs, welche aufgrund unterschiedlicher Entfernung der einzelne QMDs zu dem N × N AWG entstehen, ausgeglichen werden können.

Sofern mittels der als Sensoren ausgebildeten QMDs weitgehend statische physikalische Feldgrößen erfasst werden, wie dies beispielsweise beim Monitoring des magnetischen Erdfeldes für ein bestimmtes Areal gegeben ist, so wird es eines solchen optischen passiven Phasenschiebers im Allgemeinen nicht bedürften. Anders verhält es sich hingegen beim Monitoring eines sich schnell verändernden dynamischen elektrischen, magnetischen oder elektromagnetischen Feldes. Hier können entsprechende Laufzeitunterschiede durchaus ins Gewicht fallen, so dass für diesen Anwendungszweck das System vorzugsweise um mindestens einen solchen Phasenschieber zu ergänzen ist.

Im Zusammenhang mit dem Verfahren wurde bereits ein Anwendungsfall angesprochen, bei welchem die Quantenzustände von Einzelphotonen analysiert werden, welche durch mehrere Gruppen als Sensoren zur quantenmechanischen Erfassung physikalischer Größen ausgebildeter QMDs ausgesendet werden. Zur Einsparung von Ressourcen können dabei die Einzelphotonen der unterschiedlichen Gruppen von QMDs, welche folglich unterschiedliche Wellenlängen aufweisen, von den QMDs wellenlängenmultiplex, nach dem Prinzip der DWDM (Dense Wavelength Division Multiplex) gemeinsam über eine Faser an das N × N AWG übertragen werden. Hierzu ist allerdings ein entsprechender Wellenlängenmultiplexer zwischen den betreffenden QMDs und dem N × N AWG in dem System vorzusehen.

Das System respektive das Netzwerk kann zudem noch dadurch weitergebildet werden, dass in die Glasfaserverbindungen zwischen dem N × N AWG und der mindestens einen Analyseeinheit eine nicht blockierende schaltbare, optisch ebenfalls passive L × M Switchmatrix eingefügt wird. Die Angabe "L × M" bringt hierbei lediglich zum Ausdruck, dass die Anzahl der Ausgangsports der Matrix verschieden gegenüber der Anzahl ihrer Eingangsports sein kann. Hierdurch lässt sich eine zusätzliche Flexibilisierung erreichen. Abhängig von den Schaltzuständen dieser Switchmatrix können dabei die von einer zusammenwirkenden Gruppe von QMDs ausgesendeten Einzelphotonen, beispielsweise im Zusammenhang mit erforderlich werdenden Maßnahmen zum Um- oder Rekonfigurieren des Systems, ausgehend von den jeweiligen Ausgängen des N × N AWG einer anderen als der ursprünglich zur Analyse ihrer Quantenzustände ausgewählten Analyseeinheit zugeleitet werden. Darüber hinaus könnte eine solche Schaltmatrix (schaltbare optische Switchmatrix) aber auch dynamisch genutzt werden, um die Quantenzustände der Einzelphotonen einer Gruppe von QMDs sowohl mittels einer ersten Analyseeinheit als auch mittels einer andere Parameter verwendenden zweiten Analyseeinheit zu analysieren.

Bei QMDs des Systems, welche als Sensoren zur quantenmechanischen Erfassung physikalischer Feldgrößen fungieren, kann es sich beispielsweise um Quantenpunkte oder um unter Ausbildung von Fehlstellen dotierte Kristalle, wie beispielsweise synthetische Diamanten handeln, wobei die Quantenpunkte oder Fehlstellen aufweisenden Kristalle mittels eines von dem betreffenden QMD umfassten Pumplasers zur Aussendung von Einzelphotonen angeregt werden. Durch die Wahl des jeweiligen Pumplasers und dessen Wellenlänge wird dabei die Wellenlänge der von dem Quantenpunkt oder dem fehlstellenbesetzten Kristall ausgesendeten Einzelphotonen bestimmt.

Für die beschriebene technische Lösung können insbesondere folgende Vorteile angegeben werden:
- Nutzung eines einfachen Sternnetzes mit einem N × N AWG im Sternpunkt;
- Passives Netzwerk, das die Quantensignale (Einzelphotonen der QMDs) übertragen kann;
- Wellenlängen adressiertes Frequenzschema für das Routing der Signale
- Software defined Networking durch
   ∘ Reduzierung der Messkomponenten respektive Analyseeinrichtungen auf - bei ausschließlicher Nutzung mit als Sensoren fungierenden QMDs (also keine Analyse im Rahmen einer TF-QKD) möglicherweise nur eine Analyseeinheit (Interferenzeinheit mit Einzelphotonendetektoren) und bei zeitlich sequentiellen Messungen respektive Analysen von Quantenzuständen für die verschiedenen Messsignale,
   ∘ Wiederverwendung desselben interferenzbasierten Messaufbaus zur Analyse mehrerer Sensornetzwerke - bei Verwendung mehrerer Sensoren und entsprechender Frequenzweichen sind sogar gleichzeitige Analysen möglich;
- Nutzung eines zyklischen Verhaltens von Interferenzeinheiten und deren FSR (Free Spectral Range) zur Verringerung der benötigten Komponenten und deutliche Kostenreduzierung;
- Erweiterbarkeit der Netzarchitektur bezüglich der Anzahl der Sensoren respektive QMDs und Cluster.

Mit Hilfe von Zeichnungen sollen nachfolgend nochmals einige Aspekte der erfindungsgemäßen Lösung erläutert sowie mögliche Einsatzfälle respektive Ausführungsbeispiele gegeben werden. Die zugehörigen Zeichnungen zeigen im Einzelnen:
- Fig. 1:: die stark vereinfachte Darstellung einer möglichen Ausbildungsform des Systems für die Analyse von Einzelphotonen einer als Sensoren zusammenwirkenden Gruppe von QMDs in Kombination mit der Analyse von Quantenzustände durch ein TF-QKDSystem erzeugter Einzelphotonen,
- Fig. 2:: eine mögliche Ausbildungsform des Systems zur Analyse der Quantenzustände von durch zwei unterschiedliche Gruppen als Sensoren fungierender QMDs ausgesendeten Einzelphotonen,
- Fig. 3 - Fig. 5:: unterschiedliche Konfigurationen mit mehreren, als Sensor fungierenden QMDs, wobei an unterschiedlichen Orten jeweils mehrere dieser Sensoren zu einem Sensorcluster zusammengefasst sind.

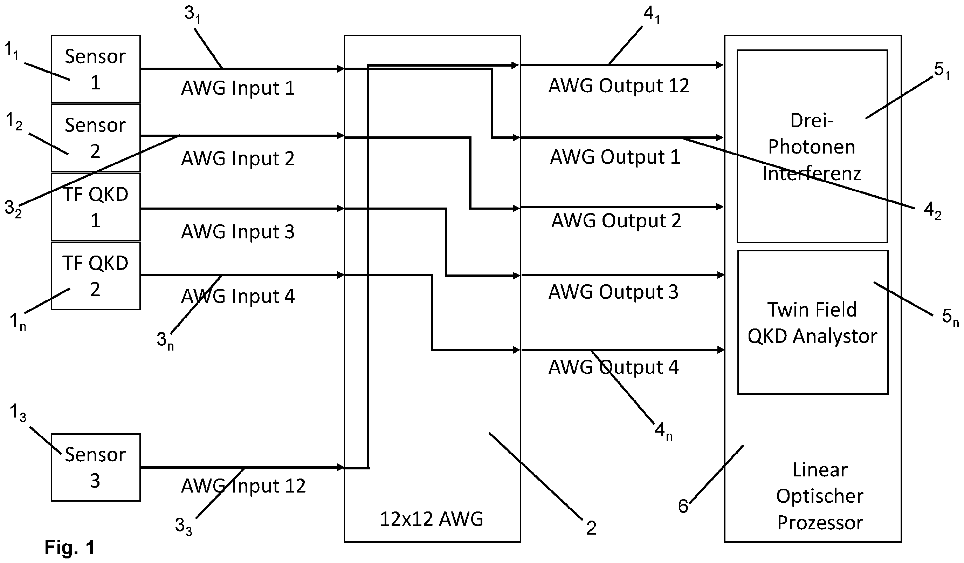

Die Fig. 1 zeigt eine mögliche Ausbildungsform des erfindungsgemäßen Systems in einer stark vereinfachten Darstellung. Mittels dieser Ausbildungsform werden mit Hilfe einer zentral angeordneten Analyseeinrichtung 6 sowohl Quantenzustände von Einzelphotonen analysiert, welche durch eine Gruppe als Sensoren zusammenwirkender QMDs 1₁, 1₂, ... 1₃ mit derselben Wellenlänge ausgesendet werden, als auch Quantenzustände von Einzelphotonen zweier zu einem TF-QKD-System gehörenden Photonenquellen.

Hierbei können die Einzelphotonen der Photonenquellen des QKD-Systems, wie in dem Beispiel gezeigt, durchaus dieselbe Wellenlänge aufweisen, wie die Einzelphotonen der als Gruppe von Sensoren zusammenwirkenden QMDs 1₁, 1₂, ... 1₃. Die mit derselben Wellenlänge durch die einzelnen QMDs 1₁, 1₂, ... 1ₙ ausgesendeten Einzelphotonen werden unterschiedlichen Eingängen eines N × N AWG 2 zugeführt. Die zyklische Arbeitsweise des N × N AWG 2 und die Verschaltung seiner Ausgänge mit der Analyseeinrichtung 6 bewirken aber dennoch, dass die von der Gruppe von Sensoren ausgesendeten Einzelphotonen einer ersten Analyseeinheit 5₁ der Analyseeinrichtung 6 zugeführt werden, wohingegen die Einzelphotonen der Photonenquellen des TF-QKD-Systems einer anderen speziellen Analyseeinheit 5ₙ (einem TF-QKD-Analysator) derselben Analyseeinrichtung 6 zugeführt werden.

Bei der letztgenannten Analyseeinheit 5ₙ handelt es sich um eine speziell für die TF-QKD ausgebildete und hergerichtete Einheit, durch welche für die von den Photonenquellen des QKD-Systems empfangenen Einzelphotonen das Auftreten einer Projektion in einem Bell-Zustand festgestellt werden kann. Bei der zur Auswertung der Quantenzustände der von der Gruppe der Sensoren empfangenen Einzelphotonen dienenden Analyseeinheit 5₁ handelt es sich hingegen um eine Interferenzeinheit, in welcher die dieselbe Wellenlänge aufweisenden Einzelphotonen der Sensoren zunächst zur Interferenz gebracht und dann zu der Analyseeinheit 5₁ gehörenden (hier nicht dargestellten) Detektoren zugeleitet werden.

Wie bereits ausgeführt, besteht ein besonderer Vorteil des Aufbaus in der Möglichkeit, die Analyseeinrichtung 6 auch bei Verwendung verschiedener Signale auf der Eingangsseite (Quantensensoren unterschiedlicher Art sowie gegebenenfalls außerdem QMDs mit Einzelphotonenquellen für die Nutzung im Rahmen der TF-QKD) oftmals nicht oder nur geringfügig - und hierbei an zentraler Stelle - verändern zu müssen. In anderen Worten, die Verwendung einer TOR-Architektur (TOR = Transparent Optically Routed) ermöglicht im Wesentlichen unverändert bleibende Analyseeinrichtungen 6 bei dynamischer Verschaltung der Eingangssignale. Quantenoptische Messaufbauten sind kostenintensiv, sehr empfindlich und sollten daher bestmöglich abgeschirmt werden. Das N × N AWG 2 wirkt in diesem Fall gewissermaßen als "Entkoppler" zwischen den Signalgebern (QMDs 1₁, 1₂, ... 1ₙ) und der mindestens einen Analyseeinrichtung 6 respektive den Analyseeinheiten 5₁, ... 5ₙ, wobei gleichzeitig die gewünschte Flexibilität der Verschaltung gegeben ist.

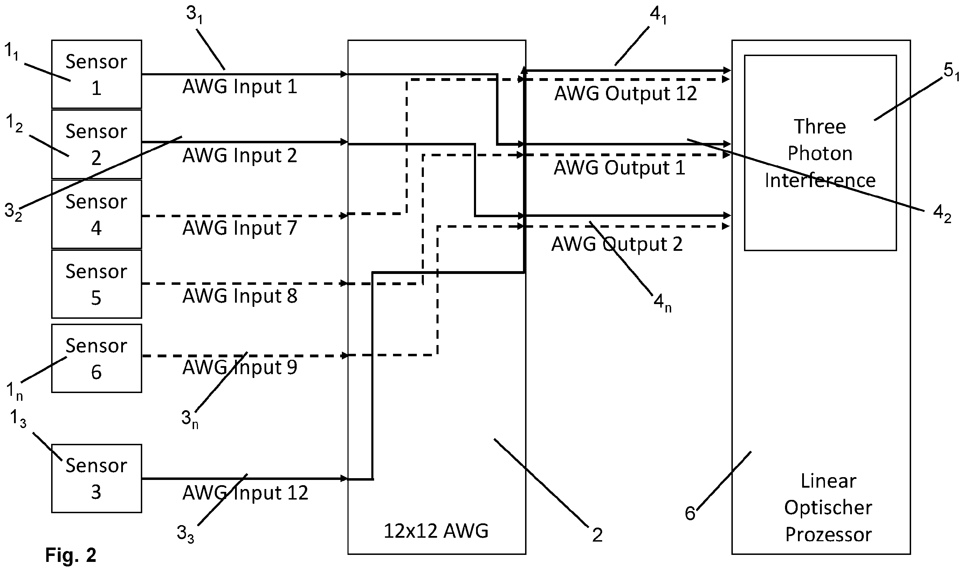

Die in der Fig. 2 gezeigte Ausbildungsform bezieht sich auf eine Variante des Systems, bei welcher die Analyseeinrichtung 6 eine Analyseeinheit 5₁ aufweist, mittels welcher die Quantenzustände von Einzelphotonen analysiert werden, welche durch die Analyseeinrichtung und deren Analyseeinheit von QMDs 1₁, 1₂, ... 1ₙ zweier unterschiedlicher Sensorgruppen empfangen werden. Jede der beiden Sensorgruppen (Gruppen von als Sensoren zur Erfassung physikalischer Feldgrößen ausgebildeter QMDs 1₁, 1₂, ... 1ₙ) senden in dem gezeigten Beispiel Einzelphotonen mit einer innerhalb der jeweiligen Gruppe identischen, aber gegenüber der anderen Gruppe verschiedenen Wellenlänge aus. Die Auswertung der Quantenzustände der Einzelphotonen beider Sensorgruppen mittels ein und derselben Analyseeinheit 5₁ der Analyseeinrichtung 6 erfolgt dabei gruppenweise, entweder gefiltert nach Wellenlängen respektive optischen Bändern oder im Zeitmultiplex.

Unter praktischen Gesichtspunkten haben die optischen Bänder/Übertragungsfrequenzbereiche - jedenfalls sofern auf eine Nutzung des optischen C-Bandes abgestellt wird - beispielsweise eine Bandbreite von 400 GHz, die von den N × N AWG 2 Eingangsports zu den entsprechenden N × N AWG 2 Ausgangsports passiv geroutet werden. Somit können sich die Frequenzen der hier zwei Sensorgruppen, welche zur Unterscheidung mit unterschiedlichen Linienarten dargestellt sind, in diesem Bereich bewegen. Sie könnten aber unter Nutzung eines Zeitmultiplexing auch übereinstimmen. Die genauen Frequenzen und die mit ihnen korrespondierenden Wellenlängen hängen auch von den verwendeten Interferenzeinheiten ab, insbesondere auch von deren Free Spectral Range (FSR) und den Maxima beziehungsweise Minima ihrer Übertragungsfunktion/Transferfunktion.

Wie bereits ausgeführt, ist zu beachten, dass bei dieser Verschaltung ein zeitliches Multiplexing notwendig ist, sofern der Messaufbau respektive die mindestens eine Analyseeinrichtung 6 nicht in der Lage ist, die unterschiedlichen Wellenlängen zu filtern oder sie - abweichend von der Darstellung der Fig. 2 -gleichzeitig zwei unterschiedlichen Analyseeinheiten, das heißt unterschiedlichen Interferenzeinheiten (Analyseeinheiten 5₁ ,..., 5ₙ) mit zugehörigen optischen Detektoren, zuzuführen. Der Vorteil der Wiederverwendung einer teuren Analyseeinrichtung 6 für mehrere Sensornetzwerke respektive Cluster von Sensoren ist allerdings evident. Eine entsprechende Interferenzeinheit hat ein zyklisches Frequenzverhalten ihrer Maxima und Minima, die jeweils einen Frequenzabstand entsprechend dem freien Spektralen Bereich (Free Spectral Range (FSR)) des Interferenzeinheit entsprechen. Das heißt, eine Interferenzeinheit kann für Messungen mehrerer Eingangssignale unterschiedlicher optischer Frequenzen/Wellenlängen genutzt werden. Die Messungen sollten dabei in zeitlich serieller Folge, also nacheinander durchgeführt werden, wobei dieselben Einzelphotonendetektoren für die verschiedenen Messungen genutzt werden können.

Der FSR ist eine Kenngröße der Interferenzeinheit und kann entsprechend designed werden, zum Beispiel kann der FSR = 2 GHz betragen. Dann würden innerhalb eines 400 GHz N × N AWG Bandes entsprechend 200 Maxima und Minima bezüglich des FSR bereitstehen für die Messung unterschiedlicher Signale, die sich in der Frequenz unterscheiden. Die Sub-Frequenzen des jeweiligen Sensornetzwerkes könnten entsprechend gewählt werden.

Auch die Analyseeinrichtung 6 des in der Fig. 2 gezeigten Ausführungsbeispiels könnte darüber hinaus, wie in der Fig. 1 gezeigt, zusätzlich einen Analysator für die TF-QKD, also eine zusätzliche spezielle Analyseeinheit 5ₙ aufweisen, welche das Auftreten von Bell-Zuständen detektiert.

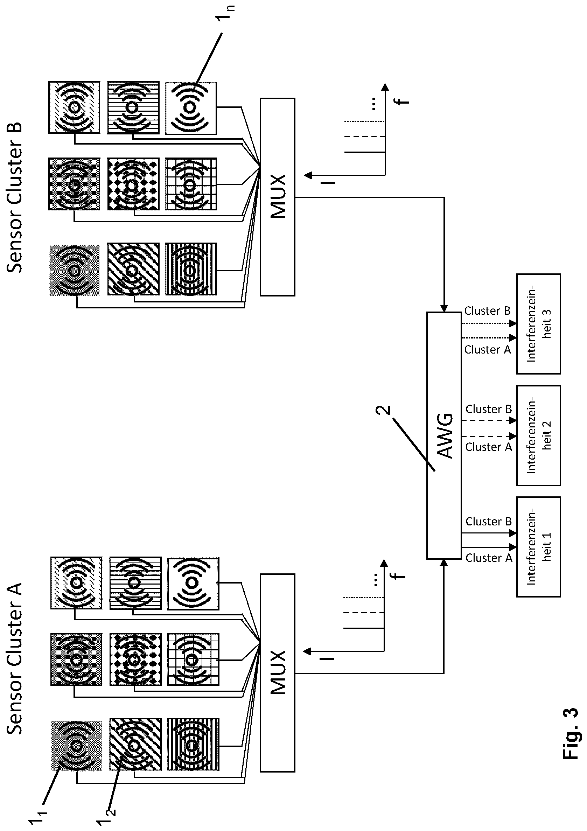

Die Figuren 3 bis 5 zeigen Ausführungsbeispiele betreffend unterschiedliche Konfigurationen des Systems, bei denen jeweils mehrere als Sensor fungierende QMDs 1₁, 1₂, ... 1ₙ unter Ausbildung örtlicher Cluster an unterschiedlichen Orten angeordnet sind. In allen drei Figuren ist dabei analyseseitig auf die dezidierte Darstellung der Analyseeinrichtung(en) verzichtet worden. Es sind vielmehr lediglich einzelne Analyseeinheiten 5₁ ,..., 5ₙ dargestellt worden, bei denen es sich vorliegend jeweils um mit (ebenfalls nicht gezeigten) Detektoren für den Empfang von Einzelphotonen zusammenwirkende Interferenzeinheiten handelt. Die betreffenden Interferenzeinheiten (Analyseeinheiten 5₁ ,..., 5ₙ) können hierbei jeweils Bestandteil einer Analyseeinrichtung 6 oder auch mehrerer unterschiedlicher Analyseeinrichtungen sein, weshalb auf die dezidierte Darstellung der Analyseeinrichtung(en) verzichtet wurde.

Insoweit müssen die in den Darstellungen gezeigten, jeweils eine Interferenzeinheit mit zugehörigen (wie gesagt, nicht gezeigten) optischen Detektoren zur Detektion von Einzelphotonen umfassenden Analyseeinheiten 5₁ ,..., 5ₙ - beispielhaft gezeigt sind zwei Analyseeinheiten 5₁ ,..., 5ₙ von gegebenenfalls (wesentlich) mehr Analyseeinheiten 5₁ ,..., 5ₙ - nicht notwendigerweise am selben Ort angeordnet sein. Im Hinblick auf die angestrebte weitgehende Zentralisierung der Analyse der Quantenzustände von den QMDs 1₁, 1₂, ... 1ₙ ausgesendeter Einzelphotonen, sind sie aber vorzugsweise gemeinsam in einer Analyseeinrichtungen 6 oder aber (gegebenenfalls jeweils zu mehreren) in einigen wenigen Analyseeinrichtungen angeordnet respektive ausgebildet.

Die Fig. 3 betrifft eine Konfiguration mit mehreren Gruppen als Sensoren zur quantenmechanischen Erfassung physikalischer Feldgrößen ausgebildeter QMDs 1₁, 1₂, ... 1ₙ, wobei die Sensoren einer jeweiligen Gruppe an unterschiedlichen Orten angeordnet sind. An den (hier zwei) unterschiedlichen Orten sind diese Sensoren mit weiteren, jeweils zu unterschiedlichen Gruppen gehörenden Sensoren unter Ausbildung eines örtlichen Clusters von Sensoren (Sensor Cluster) angeordnet. Die Sensoren einer Sensorgruppe respektive die als Gruppe zusammenwirkenden QMDs 1₁, 1₂, ... 1ₙ, von denen mindestens eine im Sensor Cluster A sowie mindestens eine im Sensor Cluster B angeordnet ist, senden die zu analysierenden Einzelphotonen in dem dargestellten Beispiel mit derselben, aber gegenüber der Wellenlänge der Einzelphotonen der jeweils anderen Sensorgruppen unterschiedlichen Wellenlänge aus.

Dennoch werden die Einzelphotonen der einzelnen, unterschiedlichen Sensorgruppen angehörenden Sensoren (QMDs 1₁, 1₂, ... 1ₙ) gemeinsam über eine einzelne Faser einem Eingangsport eines N × N AWG 2 (Arrayed-Waveguide Grating) zugeführt. Dazu werden die Einzelphotonen unterschiedlicher Wellenlänge eines örtlichen Clusters auf einen zwischen diesem Cluster und dem N × N AWG 2 angeordneten Multiplexer 7, 7'geführt und über dessen einen Ausgang in eine gemeinsame genutzte Glasfaser zur Übertragung an das N × N AWG 2 eingekoppelt. Entsprechendes gilt für die Einzelphotonen der Sensoren des jeweils anderen örtlichen Clusters. Durch das N × N AWG werden die Einzelphotonen optisch passiv so geroutet, dass jeweils Einzelphotonen derselben Wellenlänge, welche von unterschiedlichen, in verschiedenen örtlichen Clustern angeordneten, aber zusammenwirkenden Sensoren stammen, derselben Interferenzeinheit (Analyseeinheit 5₁ ,..., 5ₙ) zugeführt werden.

Abweichend von dem in der Figur gezeigten Beispiel wäre es auch denkbar, die Quantenzustände aller durch die Sensoren (QMDs 1₁, 1₂, ... 1ₙ) ausgesendeten Einzelphotonen, genauer gesagt, die Quantenzustände der Einzelphotonen der jeweiligen Sensorgruppen in einer respektive derselben Analyseeinheit 5₁ ,..., 5ₙ ausgewertet werden. Hierzu müssten die Einzelphotonen der von dieser Analyseeinheit 5₁ ,..., 5ₙ umfassten respektive sie zusammen mit den nicht gezeigten Detektoren ausbildenden Interferenzeinheit entweder nach Wellenlängen gefiltert und/oder im Zeitmultiplex gruppenweise zugeleitet werden. Diese eine Analyseeinheit 5₁ ,..., 5ₙ könnte die Messungen (die Analyse) aufgrund des weiter oben beschriebenen zyklischen Frequenzverhaltens und des FSR für alle Sensoren respektive QMDs 1₁, 1₂, ... 1ₙ ausführen. Die Frequenzen der Sub-Kanäle können auf die verschiedenen Maxima/Minima des Interferenzeinheit abgestimmt werden, so dass sich die verschiedenen Signale nicht stören. Die Anzahl der Sensoren und Cluster kann dabei entsprechend der Bandbreite der N × N AWG-Bänder und dem FSR der Interferenzeinheit gewählt werden.

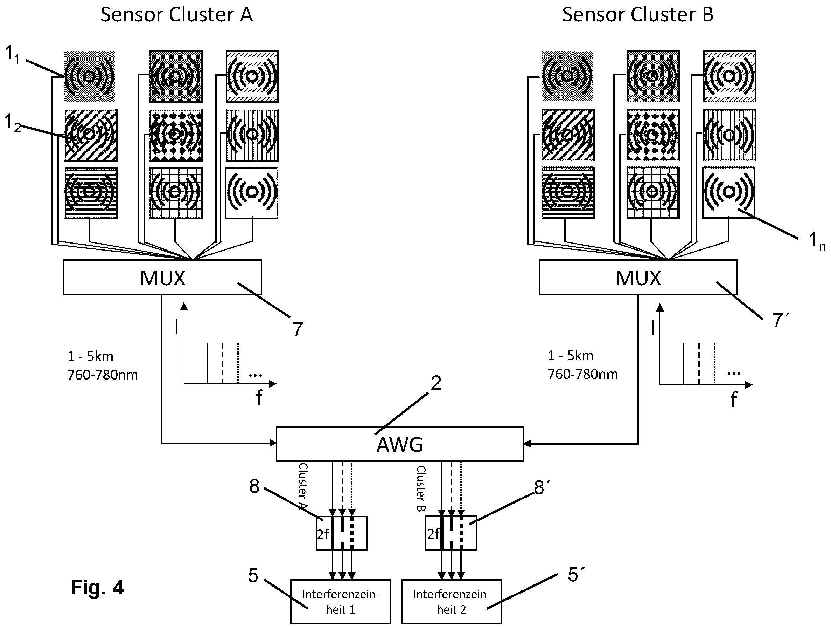

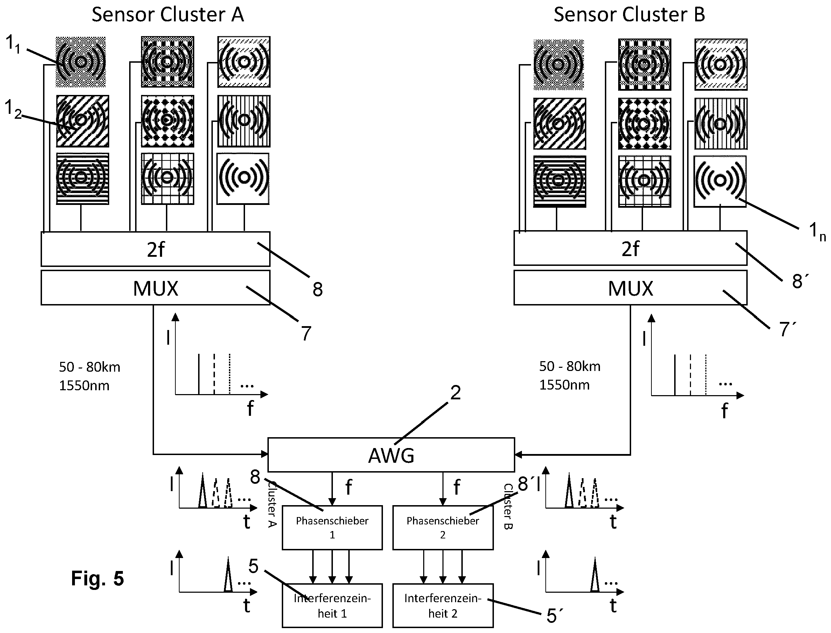

Abweichend von der Fig. 3 zeigen die Figuren 4 und 5 Konfigurationen, bei denen innerhalb eines jeweiligen der beiden örtlichen Cluster mehrere Sensorgruppen respektive mehrere Gruppen jeweils zusammenwirkender QMDs 1₁, 1₂, ... 1ₙ angeordnet sind. Hierbei können die innerhalb eines örtlichen Clusters als Gruppe zusammenwirkenden Sensoren (QMDs1₁, 1₂, ... 1ₙ), trotz ihres Zusammenwirkens in einer Gruppe, durchaus Einzelphotonen mit einer sich zwischen den einzelnen Sensoren der Gruppe unterscheidenden Wellenlänge aussenden. Soweit, wie bevorzugt, bei der Analyse der Einzelphotonen respektive ihrer Quantenzustände das Interferenzprinzip genutzt wird, kommt es insoweit nur darauf an, dass die Einzelphotonen einer Gruppe von QMDs 1₁, 1₂, ... 1ₙ (Sensoren) im Moment ihrer Übergabe an die Interferenzeinheit dieselbe Wellenlänge aufweisen.

Bei der in der Fig. 4 gezeigten Konfiguration werden die Einzelphotonen der einzelnen Sensoren jeweils mit der Wellenlänge an das N × N AWG 2 übertragen, mit welcher sie generiert und von einem jeweiligen QMD 1₁, 1₂, ... 1ₙ (Sensor) ausgesendet werden. Die Übertragung an das N × N AWG 2 erfolgt hierbei mit Hilfe des in der Figur gezeigten Multiplexers 7, 7' im Wellenlängenmultiplex (DWDM) über eine gemeinsame Glasfaser. Das N × N AWG routet die Einzelphotonen clusterweise jeweils zu einer Interferenzeinheit. Da die Nutzung des Prinzips der Interferenz nur für Einzelphotonen derselben Wellenlänge möglich ist, ist zwischen den mit einer jeweiligen Interferenzeinheit (Analyseeinheit 5₁ ,..., 5ₙ) verbundenen Ausgängen des N × N AWG 2 und der betreffenden Interferenzeinheit ein spezieller Frequenzkonverter 8, 8' (2f) angeordnet, durch welchen die Einzelphotonen von in einer Gruppe zusammenwirkenden QMDs 1₁, 1₂, ... 1ₙ auf dieselbe Wellenlänge konvertiert werden.

Entsprechendes gilt in Bezug auf beide dargestellten, die Einzelphotonen der Sensoren jeweils eines örtlichen Clusters analysierenden Analyseeinheiten 5₁ ,..., 5ₙ (Interferenzeinheiten mit zugehörigen optischen Detektoren). Die Einzelphotonen unterschiedlicher Sensorgruppen eines örtlichen Clusters werden der für die Analyse der Einzelphotonen des jeweiligen örtlichen Clusters bestimmten Analyseeinheit 5₁ ,..., 5ₙ im Zeitmultiplex zugeführt, das heißt durch die betreffende Analyseeinheit 5₁ ,..., 5ₙ erfolgt eine gruppenweise Analyse der Sensoren des jeweiligen örtlichen Sensorclusters - Sensor Cluster A respektive Sensor Cluster B.

Mittels des unmittelbar nach dem N × N AWG angeordneten optischen Frequenzkonverters 8, 8'(2f) werden die Einzelphotonen über den Prozess der Second Harmonic Generation (SHG) entsprechend einer Nichtlinearität 2.Ordnung auf den Wellenlängenbereich bei 1550 nm konvertiert. Dabei muss eine "Pumpe" innerhalb des Frequenzkonverters (2f) so konfiguriert werden, dass alle Einzelphotonen nach der Konversion dieselbe Wellenlänge haben, so dass sie in der Analyseeinheit 5₁ ,..., 5ₙ respektive in deren Interferenzeinheit interferieren können. Jeder Kanal des Frequenzkonverters 8, 8'(2f) wird dazu einen unterschiedlichen Pumplaser verwenden müssen, damit alle Einzelphotonen dieselbe Zielfrequenz erhalten können.

Bei der Nutzung des zyklischen Frequenzverhaltens der jeweiligen Interferenzeinheit (Analyseeinheit 5₁ ,..., 5ₙ) können die entsprechenden Pumplaser so eingestellt werden, dass nach der SHG die Sub-Frequenzen in den entsprechenden Maxima/Minima der Interferenzeinheit liegen. Grundsätzlich könnte auch nur eine Interferenzeinheit an einem N × N AWG-Ausgang alle Messungen (Analysen) durchführen. Die Messungen können dabei nacheinander durchgeführt werden, da zum Beispiel nur ein Einzelphotonendetektor-Pärchen vorliegen kann, an jedem Ausgang der Interferenzeinheit ein Einzelphotonendetektor. Die Messungen könnten auch parallel durchgeführt werden, wenn sie die Ausgänge der Interferenzeinheit durch optische Multiplexer/Demultiplexer mit den Frequenzabständen die dem FSR entsprechen, nutzen würden. Dann wären jedoch auch entsprechend viele Einzelphotonendetektoren notwendig, die aber sehr kostenintensiv sind. Somit ist die zeitlich serielle gegenüber der parallelen Detektion eher sinnvoll.

Die Konfiguration gemäß der Fig. 5 unterscheidet sich von der der Fig. 4 dadurch, dass die von den Sensoren (QMDs 1₁, 1₂, ... 1ₙ) eines örtlichen Clusters ausgesendeten Einzelphotonen bereits vor ihrer Übertragung an das N × N AWG 2 einem örtlichen Frequenzkonverter 8, 8' (2f) zugeführt werden. Die Wellenlänge der Einzelphotonen einer gemeinsam betrachteten Sensorgruppe wird hierbei mittels des Frequenzkonverters 8, 8' in ein Band konvertiert, welches annähernd einer Wellenlängenverdoppelung entspricht, wobei diese Einzelphotonen dieselbe Wellenlänge innerhalb dieses Bandes aufweisen. Hierdurch ist eine höhere Übertragungsreichweite möglich, da die Einzelphotonen in diesem höheren Wellenlängenbereich im Vergleich zu ihrer ursprünglichen Wellenlänge (zum Beispiel 760 nm - 780 nm) in den zu ihrer Übertragung genutzten Glasfasern einer geringeren Dämpfung unterliegen.

Damit sich die Einzelphotonen der Sensoren einer Gruppe nicht ungewollt bereits bei der Übertragung an das N × N AWG 2 überlagern, werden sie dem Frequenzkonverter 8, 8' (2f) und dem nachgeschalteten Multiplexer 7, 7' zu unterschiedlichen Zeiten, das heißt gegeneinander phasenverschoben respektive im Zeitmultiplex, zugeführt. Dies kann beispielweise durch eine entsprechende Steuerung der Pumplaser der die Einzelphotonenquellen in den Quantensensoren respektive QMDs 1₁, 1₂, ... 1ₙ anregenden Pumplaser erreicht werden. Entsprechendes geschieht mit den Einzelphotonen aller unterschiedlichen Sensorgruppen, wobei sich die Einzelphotonen der einzelnen Sensorgruppen hinsichtlich der Wellenlänge, in die sie mittels des Frequenzkonverters 8, 8' konvertiert werden, voneinander unterscheiden.

Wiederum unter Nutzung des Prinzips der DWDM werden dann die Einzelphotonen aller Sensorgruppen mit Hilfe des Multiplexers 7, 7' über eine gemeinsame Faser an das N × N AWG 2 übertragen. Die Einzelphotonen einer Sensorgruppe werden durch das N × N AWG 2 - immer noch im Zeitmultiplex - jeweils demselben Ausgang des N × N AWGs 2 zugeführt. Hinter diesem Ausgang respektive zwischen dem N × N AWG 2 und der Analyseeinheit 5₁ ,..., 5ₙ, welcher die Einzelphotonen letztlich zur Interferenz und Analyse zugeleitet werden, befindet sich ein Phasenschieber 9, 9', durch welchen das ursprünglich für die Übertragung vorgenommene Zeitmultiplexing gewissermaßen wieder aufgehoben wird. Die Einzelphotonen einer Sensorgruppe werden dann über eine der Anzahl der Sensoren einer Gruppe entsprechende Zahl von Ausgängen des Phasenschiebers 9, 9 der Analyseeinheit 5₁ ,..., 5ₙ respektive der Interferenzeinheit mit zugehörigen Detektoren zugeleitet und dort unter Nutzung des Prinzips der Interferenz analysiert.

Das System kann durch den Einsatz von beispielsweise 50 GHz DWDM Multiplexern 7, 7' (MUX-Komponenten, gegebenenfalls, aber hier nicht erforderlich, kombiniert mit Demultiplexern respektive DEMUX-Komponenten) und die Nutzung unterschiedlicher Wellenlängen auf bis zu (12 × 11 / 2) × 8 × 50 GHz (= 528 × 50 GHz) bidirektionale Wellenlängenkanäle erweitert werden. Bei 12 Knoten und 25 GHz Kanalbandbreite ergeben sich (12 × 11 / 2) × 16 × 25 GHz (= 1.056 × 25 GHz) bidirektionale Wellenlängenkanäle.

Die MUX-Komponenten (Multiplexer 7, 7') dämpfen dabei zusätzlich die optischen Pegel, so dass die Reichweite des Gesamtsystems entsprechend verringert wird. Ein Metrobereich mit ca. 40 km Durchmesser könnte aber realisiert werden. Damit könnte ein engmaschiges Netz mit einer Vielzahl von räumlich verteilten IoT Sensoren aufgebaut werden, die eine wesentlich verbesserte Ortsauflösung der erwarteten IoT-Korrelationsfunktionen für die veränderlichen äußeren elektromagnetischen Felder ergeben. Es könnte dadurch aber auch gleichzeitig eine Vielzahl von verschiedenen Quantensensornetzen betrieben werden. Bei der zyklischen Nutzung einer Interferenzeinheit sollte deren FSR mit den Parametern des Netzwerkes (optische Kanalbandbreite, Anzahl der Knoten, Bandbreite der N × N AWG-Bänder) abgestimmt werden.

Aufgrund der Co/Counter-Propagation der optischen Quantensignale (Einzelphotonen der QMDs) mit optischen Leistungen < -50 dBm können mehrere Quantensignale ohne sich zu stören gemeinsam über eine Glasfaserstrecke geführt werden. Wenn klassische Signale zusätzlich übertragen werden müssen, dann sollte ein identisches paralleles Netzwerk für die klassischen Signale aufgebaut werden.

### Liste der Bezugszeichen

- 1₁ - 1ₙ: QMD, quantenmechanische Einrichtung mit Einzelphotonenquelle
- 2: NxNAWG
- 3₁ - 3ₙ: Glasfaser
- 4₁ - 4ₙ: Glasfaser
- 5₁ - 5ₙ: Analyseeinheit
- 6: Analyseeinrichtung
- 7, 7': Multiplexer (Mux)
- 8, 8': Frequenzkonverter (2f)
- 9, 9': Phasenschieber

## Patentansprüche

1. Verfahren für eine zentralisierte Analyse von Quantenzuständen von Einzelphotonen, welche durch räumlich verteilt angeordnete quantenmechanische Einrichtungen QMDs (1₁, 1₂, ... 1ₙ) ausgesendet werden, einschließlich von Quantenzuständen durch mindestens zwei als Gruppe zusammenwirkende QMDs (1₁, 1₂, ... 1ₙ) ausgesendeter Einzelphotonen sowie der Einzelphotonen mindestens einer Gruppe als Sensoren zur quantenmechanischen Erfassung physikalischer Feldgrößen zusammenwirkender QMDs (1₁, 1₂, ... 1ₙ), **dadurch gekennzeichnet, dass** die von den QMDs (1₁, 1₂, ... 1ₙ) ausgesendeten Einzelphotonen über Glasfasern (3₁, 3₂, ... 3ₙ) Eingängen eines N × N Arrayed Waveguide Grating AWG (2) zugeführt werden, von welchem sie durch passives, transparentes optisches Routing über mit Ausgängen des N × N AWG (2) verbundene Glasfasern (4₁, 4₂, ... 4ₙ) unterschiedlichen Eingangsports mindestens einer, gegenüber den QMDs (1₁, 1₂, ... 1ₙ) beabstandeten zentralen, mit Detektoren zum Empfang der eingehenden Einzelphotonen ausgestatteten Analyseeinrichtung (6) zugeleitet werden, wobei in der mindestens einen Analyseeinrichtung (6) die Quantenzustände der Einzelphotonen einer jeweiligen Gruppe von QMDs (1₁, 1₂, ... 1ₙ) mittels der Detektoren stets gemeinsam und separat gegenüber den Quantenzuständen von anderen QMDs (1₁, 1₂, ... 1ₙ) oder Gruppen von QMDs (1₁, 1₂, ... 1ₙ) empfangener Einzelphotonen analysiert werden.

2. Verfahren nach Anspruch 1, **dadurch gekennzeichnet, dass** die Einzelphotonen als Sensoren zur quantenmechanischen Erfassung physikalischer Feldgrößen ausgebildeter sowie als Gruppe zusammenwirkender QMDs (1₁, 1₂, ... 1ₙ) vor der mittels der Detektoren erfolgenden Analyse ihrer Quantenzustände in einer Interferenzeinheit einer Analyseeinheit (5₁, ...5ₙ) der mindestens einen Analyseeinrichtung (6) zur Interferenz gebracht werden.

3. Verfahren nach Anspruch 1 oder 2, **dadurch gekennzeichnet, dass** die Wellenlänge der von den QMDs (1₁, 1₂, ... 1ₙ) ausgesendeten Einzelphotonen vor ihrer Übertragung an das N × N AWG oder vor ihrer Übertragung vom N × N AWG (2) an die mindestens eine Analyseeinrichtung (6) mittels eines optischen Frequenzkonverters (8, 8') auf ein Übertragungsband mit einem Wellenlängenbereich um 1550 nm konvertiert werden.

4. Verfahren nach einem der Ansprüche 1 bis 3, **dadurch gekennzeichnet, dass** in derselben mindestens einen Analyseeinrichtung (6) Quantenzustände von mindestens einer Gruppe als Sensoren ausgebildeter QMDs (1₁, 1₂, ... 1ₙ) empfangener Einzelphotonen analysiert werden sowie Quantenzustände von Einzelphotonen, die über andere Eingangsports der Analyseeinrichtung (6) von mindestens einer Gruppe von QMDs (1₁, 1₂, ... 1ₙ) empfangen werden, welche Teil eines Systems der Twin Field Quantum Key Distribution TF-QKD sind.

5. Verfahren nach Anspruch 4, wobei Einzelphotonen einer von QMDs (1₁, 1₂, ... 1ₙ) gebildeten Sensorgruppe sowie Einzelphotonen eines TF-QKD-Systems derselben Analyseeinrichtung über das N × N AWG (2) jeweils mit derselben Wellenlänge zugeführt werden.

6. Verfahren nach einem der Ansprüche 2 bis 5, **dadurch gekennzeichnet, dass**
- in derselben mindestens einen Analyseeinrichtung (6) Quantenzustände von Einzelphotonen analysiert werden, welche von mindestens zwei unterschiedlichen Gruppen als Sensoren ausgebildeter QMDs (1₁, 1₂, ... 1ₙ) ausgesendet werden und
- die Quantenzustände der von diesen mindestens zwei Gruppen von QMDs (1₁, 1₂, ... 1ₙ) empfangenen Einzelphotonen durch eine, nämlich dieselbe Analyseeinheit (5₁, ...5ₙ) der mindestens einen Analyseeinrichtung (6) gruppenweise, nach Wellenlängen gefiltert und/oder im Zeitmultiplex, analysiert werden.

7. Verfahren nach einem der Ansprüche 1 bis 6, **dadurch gekennzeichnet, dass** die Quantenzustände von Einzelphotonen mehrerer Gruppen als Sensoren zur quantenmechanischen Erfassung physikalischer Feldgrößen ausgebildeter QMDs (1₁, 1₂, ... 1ₙ) analysiert werden, wobei die Sensoren einer Gruppe an unterschiedlichen Orten angeordnet sind, wo sie jeweils gemeinsam mit mindestens einem Sensor mindestens einer anderen Gruppe von QMDs (1₁, 1₂, ... 1ₙ) ein örtliches Cluster von Sensoren ausbilden und dass die von den QMDs (1₁, 1₂, ... 1ₙ) eines jeweiligen Clusters ausgesendeten Einzelphotonen wellenlängenmultiplex gemeinsam über eine Glasfaser (3₁) an das N × N AWG übertragen werden.

8. System zur Analyse von Quantenzuständen durch quantenmechanische Einrichtungen QMDs (1₁, 1₂, ... 1ₙ) ausgesendeter Einzelphotonen, ausgebildet als ein Netzwerk, umfassend
- mehrere räumlich verteilt angeordnete, Einzelphotonen aussendende QMDs (1₁, 1₂, ... 1ₙ), von denen mindestens zwei als Gruppe zusammenwirken, wobei zusammenwirkende QMDs (1₁, 1₂, ... 1ₙ) mindestes einer Gruppe als Sensoren zur quantenmechanischen Erfassung physikalischer Feldgrößen ausgebildet sind,
- mindestens eine gegenüber den QMDs (1₁, 1₂, ... 1ₙ) beabstandete, Quantenzustände von Einzelphotonen analysierende zentrale Analyseeinrichtung (6) mit mehreren als Bestandteil einer oder mehrerer Analyseeinheiten (6) angeordneten optischen Detektoren zum Empfang von Einzelphotonen,
- Komponenten des Netzwerks miteinander verbindende Glasfaserkabel, **dadurch gekennzeichnet, dass**
a.) die Einzelphotonen aussendenden QMDs (1₁, 1₂, ... 1ₙ) in dem Netzwerk mit der mindestens einen Analyseeinrichtung (6) über Glasfasern (3₁, ... 3ₙ; 4₁, ... 4ₙ) und ein N × N Arrayed Waveguide Grating AWG (2) verbunden sind und
b.) das N × N AWG (2) derart konfiguriert ist, dass Einzelphotonen zusammenwirkender QMDs (1₁, 1₂, ... 1ₙ) über Ausgänge des N × N AWG (2) und Glasfasern (4₁, ... 4ₙ) der mindestens einen Analyseeinrichtung (6) zugeleitet werden und
c.) die mindestens eine Analyseeinrichtung (6) derart ausgebildet und eingerichtet ist, dass mittels der Detektoren die Quantenzustände der Einzelphotonen einer jeweiligen, durch zusammenwirkende QMDs (1₁, 1₂, ... 1ₙ) gebildeten Gruppe gemeinsam, Einzelphotonen unterschiedlicher Gruppen von QMDs (1₁, 1₂, ... 1ₙ) jedoch voneinander separat analysiert werden.

9. System nach Anspruch 8, **dadurch gekennzeichnet, dass** die mindestens eine Analyseeinrichtung (6) oder mindestens eine von mehreren Analyseeinrichtungen (6) mindestens eine Analyseeinheit (5₁, ...5ₙ) mit einer Interferenzeinheit aufweist, welche dazu ausgebildet und eingerichtet ist, darin Einzelphotonen als Sensoren zur quantenmechanischen Erfassung physikalischer Feldgrößen ausgebildeter sowie als Gruppe zusammenwirkender QMDs (1₁, 1₂, ... 1ₙ) vor der mittels der Detektoren erfolgenden Analyse ihrer Quantenzustände zur Interferenz zu bringen.

10. System nach Anspruch 8 oder 9, **dadurch gekennzeichnet, dass** die mindestens eine Analyseeinrichtung (6) oder mindestens eine von mehreren Analyseeinrichtungen wenigstens zwei Analyseeinheiten (5₁, ... 5ₙ) aufweist, von denen mindestens eine dazu ausgebildet ist, die Quantenzustände von einer Gruppe als Sensoren ausgebildeter QMDs (1₁, 1₂, ... 1ₙ) empfangener Einzelphotonen zu analysieren, wobei außerdem mindestens eine über zwei Photodetektoren zum Detektieren von Einzelphotonen verfügende Analyseeinheit (5ₙ) derselben Analyseeinrichtung (6) dazu ausgebildet ist, die Quantenzustände von Einzelphotonen zu analysieren, welche durch die Analyseeinrichtung (6) über das N × N AWG (2) von einer Gruppe von QMDs (1₁, 1₂, ... 1ₙ) empfangen werden, die Teil eines Systems der Twin Field Quantum Key Distribution TF-QKD sind.

11. System nach einem der Ansprüche 8 bis 10, **dadurch gekennzeichnet, dass** die mindestens eine Analyseeinrichtung (6) oder mindestens eine von mehreren Analyseeinrichtungen wenigstens eine Analyseeinheit (5₁, ...5ₙ) aufweist, welche dazu ausgebildet und eingerichtet ist, die Quantenzustände von mindestens zwei verschiedenen Gruppen als Sensoren ausgebildeter QMDs (1₁, 1₂, ... 1ₙ) empfangener Einzelphotonen gruppenweise, nach Wellenlängen gefiltert und/oder im Zeitmultiplex zu analysieren.

12. System nach einem der Ansprüche 8 bis 11, **dadurch gekennzeichnet, dass** dieses mindestens einen zwischen den QMDs (1₁, 1₂, ... 1ₙ) und dem N × N AWG (2) angeordneten, nach dem Prinzip des Dense Wavelength Division Multiplexing DWDM arbeitenden Multiplexer (7, 7') umfasst, der eingangsseitig mit mehreren QMDs (1₁, 1₂, ... 1ₙ), nämlich je genutztem Eingang des Multiplexers (7, 7') über jeweils eine Glasfaser mit einem QMD (1₁, 1₂, ... 1ₙ), sowie ausgangsseitig über eine, die Einzelphotonen aller eingangsseitig mit dem Multiplexer (7, 7') verbundenen QMDs (1₁, 1₂, ... 1ₙ) multiplex übertragende Glasfaser (3₁) mit dem N × N AWG (2) verbunden ist.

13. System nach einem der Ansprüche 8 bis 12, **dadurch gekennzeichnet, dass** dieses mindestens einen, zwischen den zu einer gemeinsamen Gruppe gehörenden QMDs (1₁, 1₂, ... 1ₙ) und dem N × N AWG (2) oder zwischen die Einzelphotonen einer gemeinsamen Gruppe von QMDs (1₁, 1₂, ... 1ₙ) der mindestens einen Analyseeinrichtung (6) zuleitenden Ausgängen des N × N AWG (2) und dieser Analyseeinrichtung (6) angeordneten Frequenzkonverter (8 8') umfasst.

14. System nach einem der Ansprüche 8 bis 13, **dadurch gekennzeichnet, dass** dieses Sensoren zur quantenmechanischen Erfassung physikalischer Feldgrößen umfasst, die als jeweils mittels eines Pumplasers zur Aussendung von Einzelphotonen angeregte Quantenpunkte oder mit Störstellen versehene Kristalle ausgebildet sind.

15. System nach einem der Ansprüche 1 bis 14, **dadurch gekennzeichnet, dass** in die Glasfaserverbindungen zwischen dem N × N AWG (2) und der mindestens einen Analyseeinrichtung (6) eine schaltbare, optisch passive L × M Switchmatrix eingefügt ist.
